# EUROPEAN PATENT APPLICATION

(11) **EP 4 351 245 A1**
(43) Date of publication of application: **10.04.2024**
(21) Application number: 22810997.1
(22) Date of filing: 28.03.2022
(51) Int. Cl.: H04W 72/04, H04W 72/12

(54) **TERMINAL, WIRELESS COMMUNICATION SYSTEM, AND WIRELESS COMMUNICATION METHOD**

(30) Priority: 27.05.2021 JP 2021089515
(71) Applicant: NTT DOCOMO, INC., Tokyo 100-6150 (JP)
(72) Inventor: TAKAHASHI, Yuki, Tokyo 100-6150 (JP); NAGATA, Satoshi, Tokyo 100-6150 (JP); PI, Qiping, Beijing 100190 (CN); WANG, Jing, Beijing 100190 (CN); CHEN, Lan, Beijing 100190 (CN)
(74) Representative: Hoffmann Eitle
(86) International application number: PCT/JP2022/014925
(87) International publication number: WO 2022/249721

(57) **Abstract**

A terminal comprises: a transmission unit that transmits uplink control information on an uplink channel; and a control unit that determines whether to support a simultaneous transmission of a physical uplink control channel and a physical uplink data channel based on a specific condition.

## Description

### [Technical Field]

The present disclosure relates to a terminal, a base station and a radio communication method for performing radio communication, in particular, a terminal, a radio communication system and a radio communication method related to the multiplexing of uplink control information for an uplink channel.

### [Background Art]

The 3rd Generation Partnership Project (3GPP) has specified the 5th generation mobile communication system (Also called 5G, New Radio (NR), or Next Generation (NG)) and is also in the process of specifying the next generation called Beyond 5G, 5G Evolution or 6G.

Release 15 of 3GPP supports multiplexing of two or more uplink channels (PUCCH (Physical Uplink Control Channel) and PUSCH (Physical Uplink Shared Channel)) sent in the same slot.

In addition, Release 17 of 3GPP agreed to support multiplexing Uplink Control Information (UCI) with different priorities into PUCCH or PUSCH (For example, Non-Patent Literature 1).

### [Citation List]

### [Non-Patent Literature]

### [Non-Patent Literature 1]

"Enhanced Industrial Internet of Things (IoT) and ultra-reliable and low latency communication," RP-201310, 3GPP TSG RAN Meeting #86e, 3GPP, July 2020

### [Summary of Invention]

### [Issues to be solved by the invention]

Against this background, the inventors, etc. focused on cases where UCIs on PUCCHs of the same or different priority and UCIs on PUCCHs of the same or different priority can exist as UCIs overlapping with UCIs on PUCCHs in time, as a result of careful examination, and found it necessary to define conditions for appropriately multiplexing UCIs on PUCCHs in such cases.

Accordingly, the present invention has been made in view of such a situation, and it is an object of the present invention to provide a terminal, a radio communication system, and a radio communication method capable of appropriately multiplexing a UCI on a PUCCH when various UCIs are assumed as UCIs which overlap in time with the UCI on the PUCCH.

### [Means for Solving the Problem]

An aspect of the disclosure is a terminal comprising: a transmission unit that transmits uplink control information on an uplink channel; and a control unit that determines whether to support a simultaneous transmission of a physical uplink control channel and a physical uplink data channel based on a specific condition.

An aspect of the disclosure is a radio communication system comprising: a terminal; and a base station; the terminal comprises: a transmission unit that transmits uplink control information on an uplink channel; and a control unit that determines whether to support a simultaneous transmission of a physical uplink control channel and a physical uplink data channel based on a specific condition.

An aspect of the disclosure is a radio communication method comprising: a step of transmitting uplink control information on an uplink channel; and a step of determining whether to support a simultaneous transmission of a physical uplink control channel and a physical uplink data channel based on a specific condition.

### [Brief Description of Drawings]

[FIG. 1] FIG. 1 is a general schematic diagram of the radio communication system 10.
[FIG. 2] FIG. 2 is a diagram showing the frequency range used in the radio communication system 10.
[FIG. 3] FIG. 3 is a diagram showing a configuration example of a radio frame, a sub-frame and a slot used in the radio communication system 10.
[FIG. 4] FIG. 4 is a functional block configuration diagram of the UE200.
[FIG. 5] FIG. 5 is a functional block configuration diagram of the gNB100.
[FIG. 6] FIG. 6 is a diagram for explaining the background.
[FIG. 7] FIG. 7 is a diagram for explaining the first specifying method.
[FIG. 8] FIG. 8 is a diagram for explaining the second specifying method.
[FIG. 9] FIG. 9 is a diagram for explaining the third specifying method.
[FIG. 10] FIG. 10 is a diagram 10 for explaining the third specifying method.
[FIG. 11] FIG. 11 is a diagram showing an example of a hardware configuration of the gNB100 and the UE200.

### [Modes for Carrying out the Invention]

Exemplary embodiments of the present invention are explained below with reference to the accompanying drawings. The same functions and configurations are denoted by the same or similar reference numerals, and their descriptions are omitted accordingly.

### [Embodiments]

### (1) Overall schematic configuration of a radio communication system

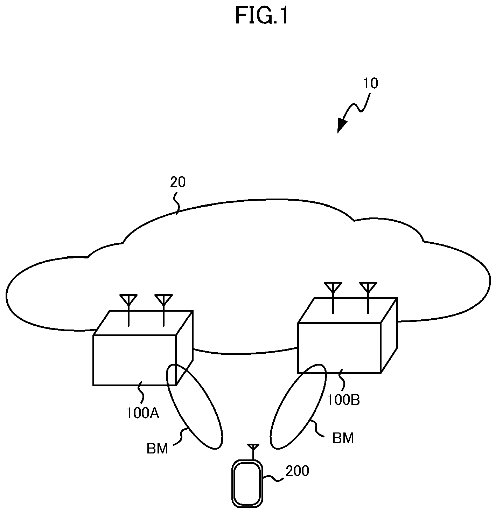

FIG. 1 is an overall schematic configuration diagram of a radio communication system 10 according to an embodiment, the radio communication system 10 is a radio communication system according to 5G New Radio (NR) and includes a Next Generation-Radio Access Network 20 (hereinafter referred to as NG-RAN20 and a terminal 200 (UE (User Equipment) 200).

The radio communication system 10 may be a radio communication system according to a system called Beyond 5G, 5G Evolution or 6G.

The NG-RAN20 includes a radio base station 100 A (gNB100A) and a radio base station 100B (gNB100B0B). The specific configuration of the radio communication system 10 including the number of gNBs and UEs is not limited to the example shown in FIG. 1.

The NG-RAN20 actually includes a plurality of NG-RAN Nodes, specifically gNBs (or ng-eNBs), connected to a core network (5GC, not shown) according toto 5G. Note that the NG-RAN20 and 5GC may be referred to simply as "networks ".

The gNB100A and gNB100B are radio base stations in accordance with 5G, and perform radio communications in accordance with the UE200 a and 5G. The gNB100A, gNB100B, and UE200 can support Massive MIMO (Multiple-Input Multiple-Output), which generates a more directional beam BM by controlling radio signals transmitted from multiple antenna elements; Carrier Aggregation (CA), which uses multiple component carriers (CCs) bundled together; and Dual Connectivity (DC), which communicates with two or more transport blocks simultaneously between the UE and each of two NG-RAN Nodes.

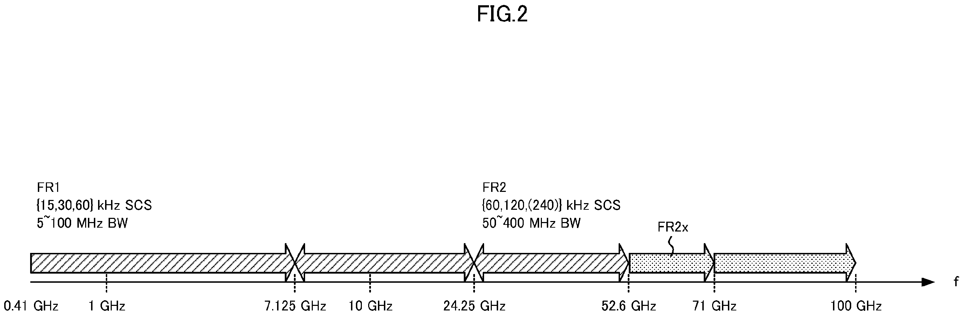

The radio communication system 10 also supports multiple frequency ranges (FRs). FIG. 2 shows the frequency ranges used in radio communication system 10.

As shown in FIG. 2, the radio communication system 10 corresponds to FR1 FRand FR2. The frequency bands of each FR are as follows.

- FR1:410 MHz -7.125 GHz ·FR2:24.25 GHz~52.6 GHz FR1 uses 15, 30 or 60 kHz sub-carrier spacing (SCS) and may use a 5-100 MHz bandwidth (BW). FR2 is higher frequency than FR1 and may use 60 or 120 kHz (may include 240 kHz) SCS and may use a 50-400 MHz bandwidth (BW).

SCS may be interpreted teas numerology. Numerology is defined in 3GPP TS38.300 and corresponds to one subcarrier interval in the frequency domain.

In addition, the radio communication system 10 corresponds to a higher frequency band than the frequency band of FR2. Specifically, the radio communication system 10 corresponds to a frequency band exceeding 52.6 GHz and up to 71 GHz or 114.25 GHz. Such a high frequency band may be referred to as "FR 2 x" for convenience.

In order to solve the problem that the influence of phase noise increases in the high frequency band, a cyclic prefix-orthogonal frequency division multiplexing (CP-OFDM)/discrete Fourier transform-spread (DFT-S-OFDM) with a larger sub-carrier spacing (SCS) may be applied when a band exceeding 52H.6 GHz is used.

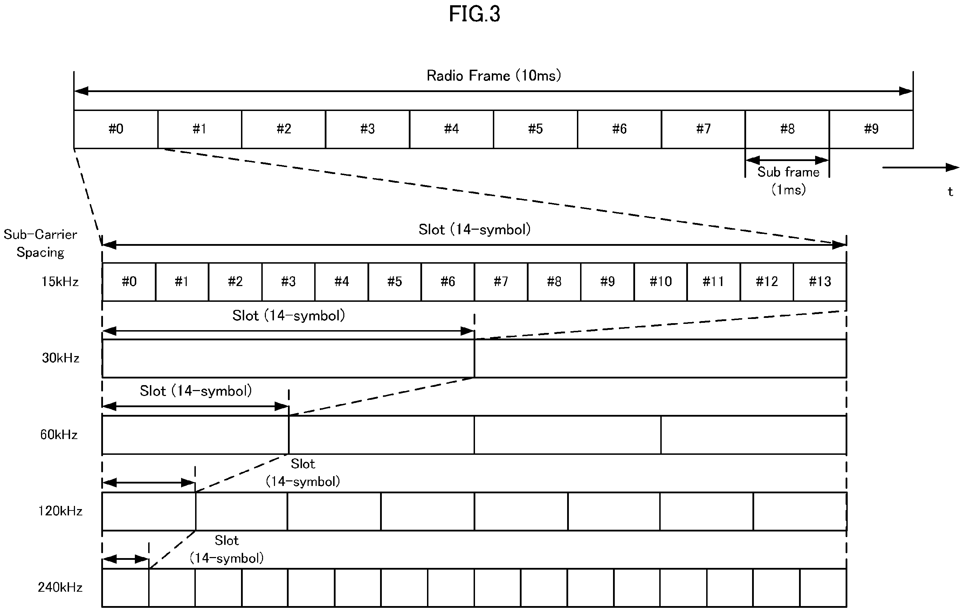

FIG. 3 shows a configuration example of a radio frame, a sub-frame and a slot used in the radio communication system 10.

As shown in FIG. 3, a slot consists of 14 symbols, and the larger (wider) the SCS, the shorter the symbol per period (and slot period). The SCS is not limited to the interval (frequency) shown in FIG. 3. For example, 480 kHz, 960 kHz, and the like may be used.

The number of symbols constituting 1 slot may not necessarily be 14 symbols (For example, 28, 56 symbols). Furthermore, the number of slots per subframe may vary depending on the SCS.

Note that the time direction (t) shown in FIG. 3 may be referred to as a time domain, symbol period, symbol time, etc. The frequency direction may be referred to as a frequency domain, resource block, subcarrier, bandwidth part (BWP), etc.

A DMRS is a type of reference signal and is prepared for various channels. In this context, unless otherwise specified, a DMRS for a downlink data channel, specifically a PDSCH (Physical Downlink Shared Channel), may be used. However, a DMRS for an uplink data channel, specifically a PUSCH (Physical Uplink Shared Channel), may be interpreted in the same way as a DMRS for a PDSCH.

The DMRS may be used for channel estimation in a device, e.g., UE200, as pas rt of a coherent demodulation. The DMRS may be present only in the resource block (RB) used for PDSCH transmission.

The DMRS may have more than one mapping type. Specifically, the DMRS may have a mapping type A and a mapping type B. In a mapping type A, the first DMRS is located in the second or third symbol of the slot. In a mapping type A, the DMRS may be mapped relative to the slot boundary regardless of where the actual data transmission is initiated in the slot. The reason why the first DMRS is placed in the second or third symbol of the slot may be interpreted as placing the first DMRS after the control resource sets (CORESET).

In mapping type B, the first DMRS may be placed in the first symbol of the data allocation. That is, the location of the DMRS may be given relative to where the data is located, rather thana relative to the slot boundary.

The DMRS may also have more than one type. Specifically, the DMRS may have Type 1 and Type 2. Type 1 and Type 2 differ in the maximum number of mapping and orthogonal reference signals in the frequency domain. Type 1 can output up to four orthogonal signals in single-symbol DMRS, and Type 2 can output up to eight orthogonal signals in double-symbol DMRS.

(2) Radio communication system functional block configuration Next, a functional block configuration of the radio communication system 10 will be described.

First, a functional block configuration of the UE200 will be described.

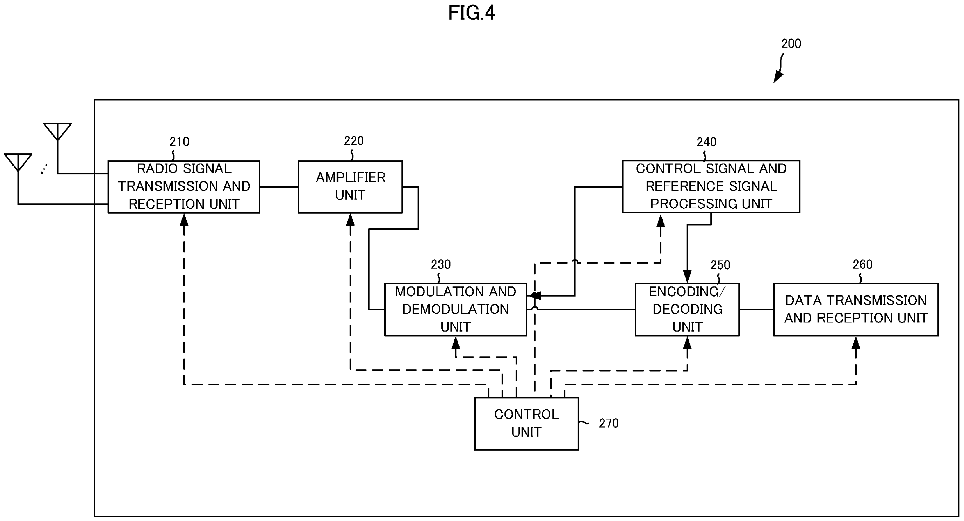

FIG. 4 is a functional block configuration diagram of the UE200. As shown in FIG. 4, the UE200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

The radio signal transmission and reception unit 210 transmits and receives radio signals in accordance with the NR. the radio signal transmission and reception unit 210 corresponds to a Massive MIMO, a CA using a plurality of CCs bundled together, and a DC that simultaneously communicates between a UE and each of two NG-RAN Nodes.

The amplifier unit 220 is composed of a PA (Power Amplifier)/LNA (Low Noise Amplifier) or the like. the amplifier unit 220 amplifies the signal output from the modulation and demodulation unit 230 to a predetermined power level. the amplifier unit 220 amplifies the RF signal output from radio signal transmission and reception unit 210.

The modulation and demodulation unit 230 performs data modulation/demodulation, transmission power setting, resource block allocation, etc. for each predetermined communication destination (gNB100 or other gNB). In the modulation and demodulation unit 230, Cyclic Prefix-Orthogonal Frequency Division Multiplexing (CP-OFDM)/Discrete Fourier Transform-Spread (DFT-S-OFDM) may be applied. DFT-S-OFDM may be used not only for the uplink (UL) but also for the downlink (DL).

The control signal and reference signal processing unit 240 performs processing related to various control signals transmitted and received by the UE200 and various reference signals transmitted and received by the UE200.

Specifically, the control signal and reference signal processing unit 240 receives various control signals transmitted from the gNB100 via a predetermined control channel, for example a radio resource control layer (RRC) control signal. the control signal and reference signal processing unit 240 also transmits various control signals to the gNB100 via a predetermined control channel.

The control signal and reference signal processing unit 240 executes processing using a reference signal (RS) such as a demodulation reference signals (DMRS) and a phase tracking reference signal (PTRS).

The DMRS is a known reference signal (pilot signal) between a base station and a terminal of each terminal for estimating a fading channel used for data demodulation. The PTRS is a reference signal of each terminal for estimating phase noise, which is a problem in a high frequency band.

In addition to the DMRS and the PTRS, the reference signal may include a Channel State Information-Reference Signal (CSI-RS), a Sounding Reference Signal (SRS), and a Positioning Reference Signal (PRS) for position information.

The channel may include a control channel and a data channel. The control channel may include PDCCH (Physical Downlink Control Channel), PUCCH (Physical Uplink Control Channel), RACH (Random Access Channel), Downlink Control Information (DCI) including Random Access Radio Network Temporary Identifier (RA-RNTI), and Physical Broadcast Channel (PBCH).

The data channel may also include PDSCH (Physical Downlink Shared Channel) and PUSCH (Physical Uplink Shared Channel). Data means data transmitted over a data channel. A data channel may be read as a shared channel.

Here, the control signal and reference signal processing unit 240 may receive downlink control information (DCI). The DCI includes existing fields for storing DCI Formats, Carrier indicator (CI), BWP indicator, Frequency Domain Resource Assignment (FDRA), Time Domain Resource Assignment (TDRA), Modulation and Coding Scheme (MCS), HPN (HARQ Process Number), New Data Indicator (NDI), Redundancy Version (RV), and the like.

The value stored in the DCI Format field is an information element that specifies the format of the DCI. The value stored in the CI field is an information element that specifies the CC to which the DCI applies. The value stored in the BWP indicator field is an information element that specifies the BWP to which the DCI applies. The BWP that can be specified by the BWP indicator is set by an information element (Bandwidth Part-Config) contained in the RRC message. The value stored in the FDRA field is an information element that specifies the frequency domain resource to which the DCI applies. The frequency domain resource is specified by the value stored in the FDRA field and the information element (RA Type) contained in the RRC message. The value stored in the TDRA field is the information element that specifies the time domain resource to which the DCI is applied. The time domain resource is specified by the value stored in the TDRA field and the information element (pdsch-TimeDomainAllocationList, pusch-TimeDomainAllocationList) contained in the RRC message. The time domain resource may be specified by the value stored in the TDRA field and the default table. The value stored in the MCS field is an information element that specifies the MCS to which the DCI applies. The MCS is specified by the value stored in the MCS and the MCS table. The MCS table may be specified by an RRC message or specified by RNTI scrambling. The value stored in the HPN field is an information element that specifies the HARQ Process to which the DCI is applied. The value stored in the NDI is an information element that identifies whether the data to which the DCI is applied is first-time data. The value stored in the RV field is an information element that specifies the redundancy of the data to which the DCI is applied.

The encoding/decoding unit 250 performs data partitioning/concatenation and channel coding/decoding for each predetermined communication destination (gNB100 or other gNB).

Specifically, the encoding/decoding unit 250 divides the data output from the data transmission and reception unit 260 into predetermined sizes and performs channel coding for the divided data. the encoding/decoding unit 250 decodes the data output from the modulation and demodulation unit 230 and concatenates the decoded data.

The data transmission and reception unit 260 transmits and receives the protocol data unit (PDU) and the service data unit (SDU). Specifically, the data transmission and reception unit 260 performs assembly/disassembly of the PDU/SDU in a plurality of layers (Media access control layer (MAC), radio link control layer (RLC), packet data convergence protocol layer (PDCP), etc.). the data transmission and reception unit 260 also performs error correction and retransmission control of data based on HARQ (Hybrid Automatic Repeat Request).

The control unit 270 controls each functional block constituting the UE200. In an embodiment, the control unit 270 may control the multiplexing of uplink control information (hereinafter UCIs:) of the physical uplink control channel (hereinafter PUCCH).

Here, the first priority and the second priority may be assumed as the priority of the UCI. The first priority is different from the second priority. Two types of UCI priorities, HP (High Priority) and LP (Low Priority), are illustrated. The first priority may be HP, the second priority may be LP, the first priority may be LP, and the second priority may be HP. Three or more types of priorities may be specified as UCI priorities.

Note that the control unit 270 controls the control signal and reference signal processing unit 240 described above, and the control signal and reference signal processing unit 240 constitutes a transmission unit that transmits UCI via an uplink channel (PUCCH or PUSCH). the control signal and reference signal processing unit 240 may transmit a specific UCI multiplexed with a UCI (Below, subject UCI) selected based on a specific method via an uplink channel (PUCCH or PUSCH). As the specific method, the first specific method, the second specific method, and the third specific method may be considered, as described later. Details of these specific methods will be described later.

Second, the functional block configuration of the gNB100 will be described.

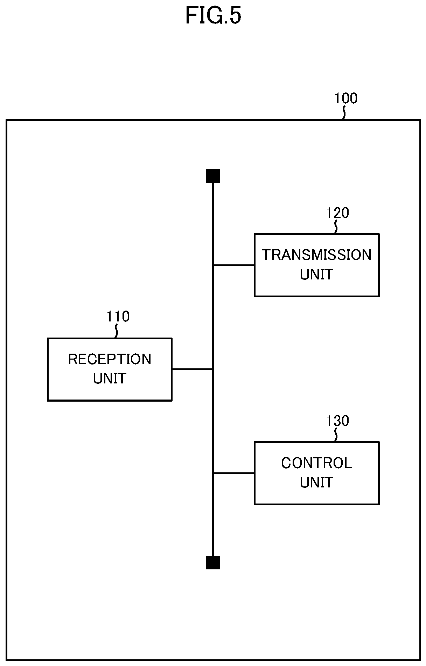

FIG. 5 is a functional block diagram of the gNB100. As shown in FIG. 5, the gNB100 has a reception unit 110, a transmission unit 120, and a control unit 130.

The reception unit 110 receives various signals from the UE200. The reception unit 110 may receive UL signals via PUCCH or PUSCH.

The transmission unit 120 transmits various signals to the UE200. The transmission unit 120 may transmit DL signals via PDCCH or PDSCH.

The control unit 130 controls the gNB100. The control unit 130 assumes that reception unit 110 receives a specified UCI multiplexed with a UCI selected based on the specific method (target UCI) over an uplink channel (PUCCH or PUSCH).

### (3) Background

The background of the embodiment will be described below. In the embodiment, attention will be paid to a case in which a UCI on a PUCCH of the same priority, a UCI on a PUCCH of a different priority, a UCI on a PUSCH of the same priority, and a UCI on a PUSCH of a different priority may exist as a UCI overlapping a specific UCI on a specific PUCCH in time. In the following, UCI may be used synonymously with PUCCH or PUSCH.

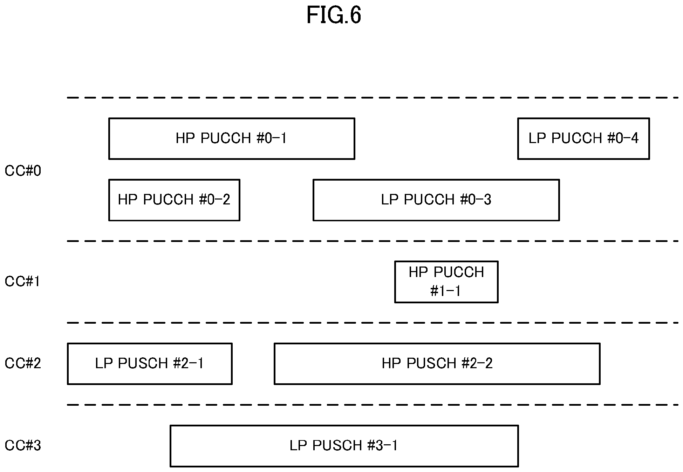

For example, consider the case where various UCIs are transmitted in each CC as shown in FIG. 6. Specifically, transmission of HP PUCCH#0-1, HP PUCCH#0-2, LP PUCCH#0-3, and LP PUCCH#0-4 is scheduled in CC#0. Transmission of HP PUCCH#1-1 is scheduled in CC#1. In CC#2, transmission of LP PUSCH#2-1 and HP PUSCH#2-2 is scheduled. In CC#3, transmission of LP PUSCH#3-1 is scheduled.

In such a case, assuming that the specific PUCCH (specific UCI) is HP PUCCH#0-1, the UCIs that overlap in time with HP PUCCH#0-1 are HP PUCCH#0-2, LP PUCCH#0-3, LP PUSCH#2-1, HP PUSCH#2-2, and LP PUSCH#3-1. On the other hand, assuming that the specific PUCCH (specific UCI) is LP PUCCH#0-3, the UCIs that overlap in time with LP PUCCH#0-3 are HP PUCCH#0-1, LP PUCCH#0-4, HP PUSCH#1-1, HP PUSCH#2-2, and LP PUSCH#3-1.

Therefore, it is necessary to define a method (condition and order) for multiplexing various PUCCHs. In the embodiment, the first specific method, the second specific method, and the third specific method are defined as methods for multiplexing PUCCHs.

### (4) First specific method

The first specific method will be described below. The first specific method may include the following two steps.

The first phase may be a step of selecting the first target UCI to be multiplexed with the selected first target UCI based on the first specific condition when the uplink control information (specified UCI) on the PUCCH temporally overlaps the first target uplink control information (Hereinafter, the first target UCI) on the physical uplink control channel (PUCCH), and multiplexing the selected first target UCI with the specified UCI. The first phase may be considered to be a step of resolving the temporal overlap between the PUCCH and the PUCCH.

The first specific condition may be a condition of selecting a first target UCI (The first target UCI (same priority)) on the PUCCH having the same priority as the specified UCI on the PUCCH, and then selecting a first target UCI (The first target UCI (different priority)) on the PUCCH having a priority different from the specified UCI. That is, the specified UCI is multiplexed with a first target UCI (same priority) that overlaps the specified UCI in time, and when there is no first target UCI (same priority) that overlaps the specified UCI in time, the specified UCI is multiplexed with a first target UCI (different priority) that overlaps the specified UCI in time.

In the second phase, when the specified UCI on the PUCCH overlaps the second target uplink control information (The second target UCI) on the physical uplink shared channel (PUSCH) in time, the second target UCI that overlaps the specified UCI is selected based on the second specific condition, and the selected second target UCI and the specified UCI may be multiplexed. The second phase may be considered to resolve the temporal overlap between PUCCH and PUSCH.

First, the second specific condition may include a first condition that applies when the priority of the second target UCI on the PUSCH that overlaps the specific UCI in time is assumed to be the same as the priority of the specific UCI. The first condition may include the following conditions:

The first condition may include condition 1A for selecting a PUSCH of A (Aperiodic)-CSI that overlaps a resource of a specific PUCCH.

The first condition may include condition 1B for selecting a PUSCH with the earliest slot (s) relative to the first slot (s) of the PUCCH.

The first condition may include condition 1C for preferentially selecting a PUSCH scheduled by a Dynamic Grant (DG PUSCH) over a PUSCH scheduled by a Configured Grant (CG PUSCH).

The first condition may include condition 1D, which preferentially selects PUSCH of CC serving cells having a smaller CC serving cell index than PUSCH of CC serving cells having a larger CC serving cell index.

The first condition may include condition 1E, which preferentially selects PUSCH of early transmission over PUSCH of late transmission.

Here, the first condition may be applied in the order of condition 1A→ condition 1B→ condition 1C→ condition 1D→ condition 1E.

Second, the second specific condition may include a second condition for at least one of the delay and reliability of the specific UCI. Although not particularly limited, the second condition may be a condition 2A defining a PUSCH in which the specific PUCCH cannot be multiplexed or a condition 2B defining a PUSCH in which the specific PUCCH can be multiplexed in terms of the delay of the specific UCI. The second condition may be a condition 2C defining a PUSCH in which the specific PUCCH cannot be multiplexed or a condition 2D defining a PUSCH in which the specific PUCCH can be multiplexed in terms of the reliability of the specific UCI.

The second condition may be applied if the priority of the second target UCI on the PUSCH that temporally overlaps the specific UCI is assumed to be the same as the priority of the specific UCI. The second condition may be applied if the priority of the second target UCI on the PUSCH that temporally overlaps the specific UCI is assumed to be different from the priority of the specific UCI.

Third, the second specific condition may include a third condition applied to cases where HP UCI and LP UCI are already multiplexed on the specific PUCCH. The priority of HP+LP may be considered a different priority than HP and LP. The third condition may be condition 3A for selecting HP PUSCH or condition 3B for selecting LP PUSCH. The third condition may be a condition under which the same conditions as the first condition described above are applied to all PUSCHs that overlap in time with the specific PUCCH.

Fourth, the second specific condition may include a fourth condition applied to a case where HP UCI and LP UCI are already multiplexed on the specific PUCCH. The priority of HP+LP may be considered a priority different from that of HP and LP. The fourth condition may be a condition in which the UCI (HP+LP UCI) on the specified PUCCH is multiplexed on the second PUSCH according to the priority. For example, the fourth condition may be a condition in which the HP UCI on the specified PUCCH is multiplexed on the HP PUSCH having the same priority as the HP UCI, and the LP UCI on the specified PUCCH is multiplexed on the LP PUSCH having the same priority as the HP UCI.

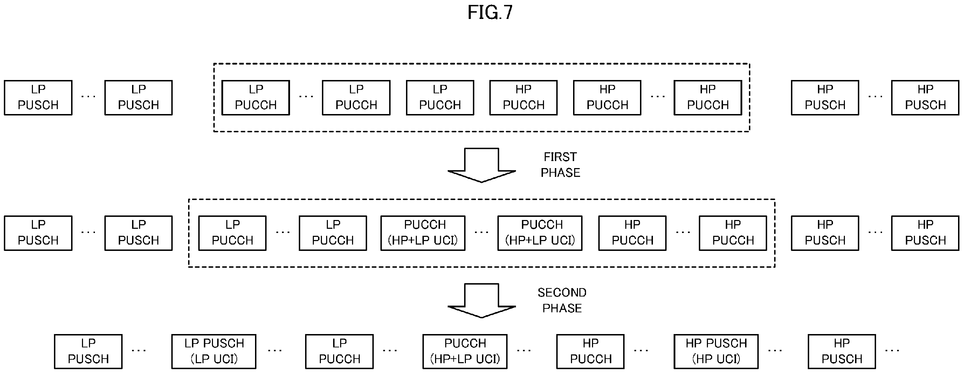

For example, as shown in FIG. 7, a method for multiplexing LP PUSCH, LP PUCCH, HP PUCCH and HP PUSCH is considered.

In the first phase, multiplexing LP PUCCH and HP PUCCH, which overlap in time, is performed. Specifically, HP UCI and LP UCI can be multiplexed into one PUCCH (In FIG. 7, PUCCH (HP+LP UCI)). In the absence of other temporally overlapping PUCCHs, LP PUCCH and HP PUCCH can remain unmultiplied.

In the second phase, the temporally overlapping PUCCH and PUSCH multiplexes are performed. Specifically, the LP UCI on the PUCCH can be multiplexed on the LP PUSCH (In FIG. 7, LP PUSCH (LP UCI)). Similarly, the HP UCI on the PUCCH can be multiplexed on the HP PUSCH (In FIG. 7, HP PUSCH (HP UCI)). However, the LP UCI on the PUCCH can be multiplexed on the HP PUSCH, and the HP UCI on the PUCCH can be multiplexed on the LP PUSCH.

### (5) Second specific method

The second specific method will be described below. The second specific method may include the following two steps.

The first phase may be a step of selecting the first target uplink control information (Hereinafter, the first target UCI) to be multiplexed with the uplink control information based on the first specification condition when the uplink control information (specified UCI) on the PUCCH having the first priority temporally overlaps with the first target uplink control information on the uplink channel (PUCCH or PUSCH) having the first priority, and multiplexing the selected first target UCI with the specified UCI. The first phase may be considered to be the step of resolving the temporal overlap between uplink channels (PUCCH or PUSCH) of the same priority.

The first specific condition may be a condition of selecting a first target UCI (The first subject UCI (PUCCH)) on PUCCH having the same priority as the specified UCI on PUCCH, and then selecting a first target UCI (The first subject UCI (PUSCH)) on PUSCH having the same priority as the specified UCI. That is, the specified UCI is multiplexed with a first target UCI (PUCCH) temporally overlapping the specified UCI, and when there is no first target UCI (PUCCH) temporally overlapping the specified UCI, the specified UCI is multiplexed with a first target UCI (PUSCH) temporally overlapping the specified UCI. When there are two or more first target UCIs (PUSCH) temporally overlapping the specified UCI, the first condition (i.e., Condition 1A to Condition 1E) described in the first specifying method may be used as the first specific condition.

In the second phase, when the specified UCI on the PUCCH having the first priority temporally overlaps the second target uplink control information (The second target UCI) on the uplink channel (PUCCH or PUSCH) having the second priority, the second target UCI to be multiplexed with the specified UCI may be selected based on the second specific condition, and the selected second target UCI and the specified UCI may be multiplexed. The second phase may be considered to be a stage to resolve the temporal overlap between the uplink channels (PUCCH or PUSCH) having the different priority.

First, if the specific UCI on the PUCCH having the first priority overlaps only the second target UCI on the PUCCH having the second priority (The second subject UCI (PUCCH)) in time, the second specific condition may include a condition to multiplex LP PUCCH to HP PUCCH and may include a condition to multiplex HP PUCCH to LP PUCCH.

Second, if the specified UCI on the PUCCH having the first priority temporally overlaps only the second target UCI on the PUCCH having the second priority (The second subject UCI (PUSCH)), the second condition (i.e., Condition 2A to Condition 2D) described in the first specifying method may be used asf the second specific condition. As described above, the second condition may include a condition for at least one of the delay and reliability of the specified UCI. As the second specific condition, the third condition (i.e., Condition 3A to Condition 3B) described in the first specific method may be used for a PUSCH having a priority different from the specified UCI, and the fourth condition described in the first specific method may be used.

Third, if the specified UCI on the PUCCH having the first priority overlaps in time with both the second target UCI (PUCCH) and the second target UCI (PUSCH), the second specific condition may include a condition for selecting the second target UCI (PUCCH) more preferentially than the second target UCI (PUSCH). The second specific condition may include a condition for selecting the second target UCI (PUSCH) more preferentially than the second target UCI (PUCCH). In such a case, if there are two or more second target UCIs (PUSCH) that overlap in time with the specified UCI, the second condition (i.e., Condition 2A to Condition 2D) described in the first specific method may be used as the second specific condition.

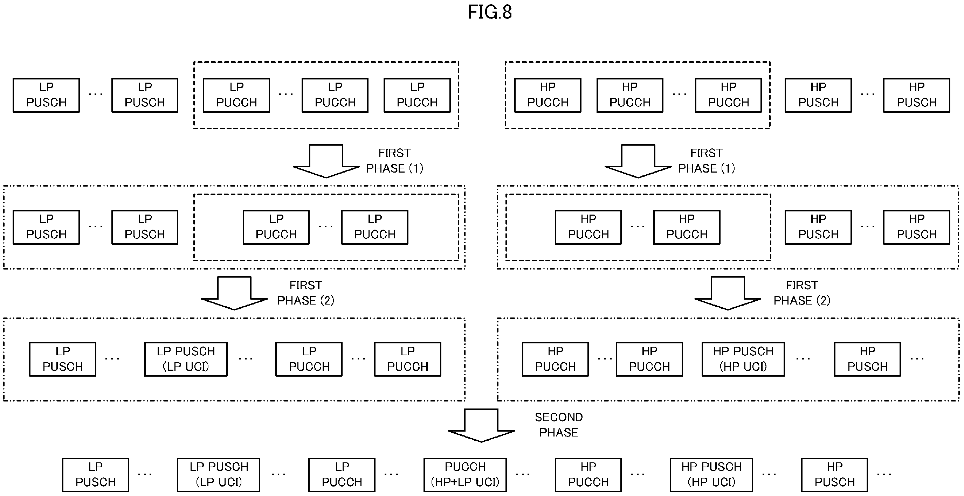

For example, as shown in FIG. 8, consider a multiplex method of LP PUSCH, LP PUCCH, HP PUCCH and HP PUSCH.

In the first phase, multiplexing of uplink channels (LP PUCCH/LP PUCCH, LP PUCCH/LP PUSCH, HP PUCCH/HP PUCCH, HP PUCCH/HP PUSCH) of the same priority is performed. Specifically, in the first phase (1), temporally overlapping LP PUCCHs may be multiplexed and temporally overlapping HP PUCCHs may be multiplexed. As a result, a state in which temporally overlapping LP PUCCHs do not exist and temporally overlapping HP PUCCHs do not exist is realized. In the first phase (2), temporally overlapping LP PUCCHs and LP PUSCHs can be multiplexed, and temporally overlapping HP PUCCHs and HP PUSCHs can be multiplexed. Specifically, PUCCHs can be multiplexed on LP PUSCHs (In FIG. 8, LP PUSCH (LP UCI)). Similarly, HP PUCCHs can be multiplexed on HP PUSCHs (In FIG. 8, HP PUSCH (HP UCI)).

In a second phase, multiplexing of different priority uplink channels (LP PUCCH/HP PUCCH, LP PUCCH/HP PUSCH, HP PUCCH/LP PUSCH) is performed. Specifically, HP UCI and LP UCI can be multiplexed into one PUCCH (In FIG. 8, PUCCH (HP+LP UCI)). Furthermore, the LP UCI on the PUCCH may be multiplexed to the HP PUSCH, and the HP UCI on the PUCCH may be multiplexed to the LP PUSCH.

### (6) Third specific method

The third specific method will be described below. The third specific method may include the following four steps.

The first phase may be a step of selecting a first target UCI (same priority/PUCCH) to be multiplexed with the specific UCI based on the first specific condition, when the uplink control information (specific UCI) on the PUCCH having the first priority overlaps in time with the first target specific UCI (The first target UCI (same priority/PUCCH)) on the physical uplink control channel (PUCCH) having the first priority, and multiplexing the selected first target UCI (same priority/PUCCH) with the specific UCI.

The first specific condition is a condition of selecting a first target UCI (The first subject UCI (PUCCH)) on the PUCCH having the same priority as the specific UCI on the PUCCH. The first specific condition of the third specific method may be considered to be the same as a part of the first specific condition of the second specific method. In the third specific method, the first phase may be applied in parallel for both LP PUCCH and HP PUCCH.

The second phase may be a step of selecting a second target UCI (same priority/PUSCH) to be multiplexed with the selected second target UCI (same priority/PUSCH) based on the second specific condition when the specified UCI temporally overlaps with the second target uplink control information (The second target UCI (same priority/PUSCH)) on the physical uplink shared channel (PUSCH) having the first priority.

The second specific condition is a condition of selecting a second target UCI (same priority/PUSCH) on the PUSCH having the same priority as the specified UCI. The second specific condition of the third specific method may be considered to be the same as a part of the first specific condition of the second specific method. However, in the second specific method, the first phase is applied in parallel to both LP PUCCH and HP PUCCH, while in the third specific method, the second phase is applied in series to either LP PUCCH or HP PUCCH. When two or more second target UCIs (same priority/PUSCH) that overlap in time with the specified UCI exist, the first condition (i.e., Condition 1A to Condition 1E) described in the first specific method may be used as the second specific condition.

In the third phase, when the specified UCI overlaps in time with the third target uplink control information (The third target UCI (different priority/PUCCH)) on the physical uplink control channel (PUCCH) having the second priority, a third target UCI (different priority/PUCCH) that overlaps with the specified UCI may be selected based on the third specific condition, and the selected third target UCI (different priority/PUCCH) and the specified UCI may be multiplexed.

The third specific condition may include a condition for multiplexing LP PUCCH to HP PUCCH and a condition for multiplexing HP PUCCH to LP PUCCH. The third specific condition of the third specific method may be considered to be similar to a part of the second specific condition of the second specific method. However, the third specific method differs from the second specific method in that it is defined that PUCCH is preferentially selected over PUSCH as a cross-priority uplink channel on which specific UCIs are multiplexed.

The fourth phase may be a step of selecting a fourth target UCI (cross-priority/PUSCH) multiplexed with the specific UCI based on the fourth specific condition and multiplexing the selected fourth target UCI (cross-priority/PUSCH) with the specific UCI when the specific UCI temporally overlaps the fourth target uplink control information (The fourth target UCI (different priority/PUSCH)) on the physical uplink shared channel (PUSCH) having the second priority.

As the fourth specific condition, the second condition (i.e., Condition 2A to Condition 2D) described in the first specific method may be used. The fourth specific condition of the third specific method may be considered to be the same as a part of the second specific condition of the second specific method. However, the third specific method differs from the second specific method in that it is defined that PUCCH is preferentially selected over PUSCH as a cross-priority uplink channel on which specific UCIs are multiplexed.

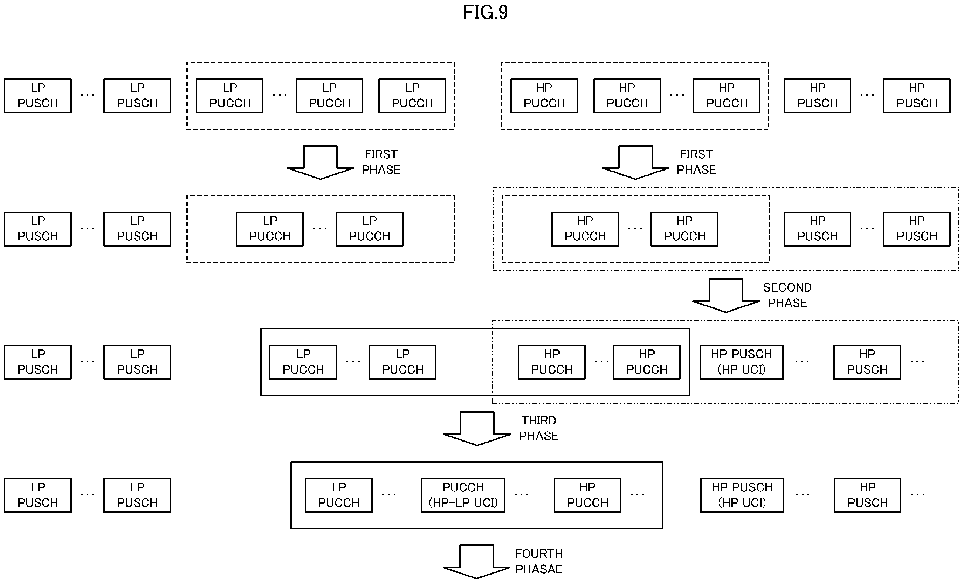

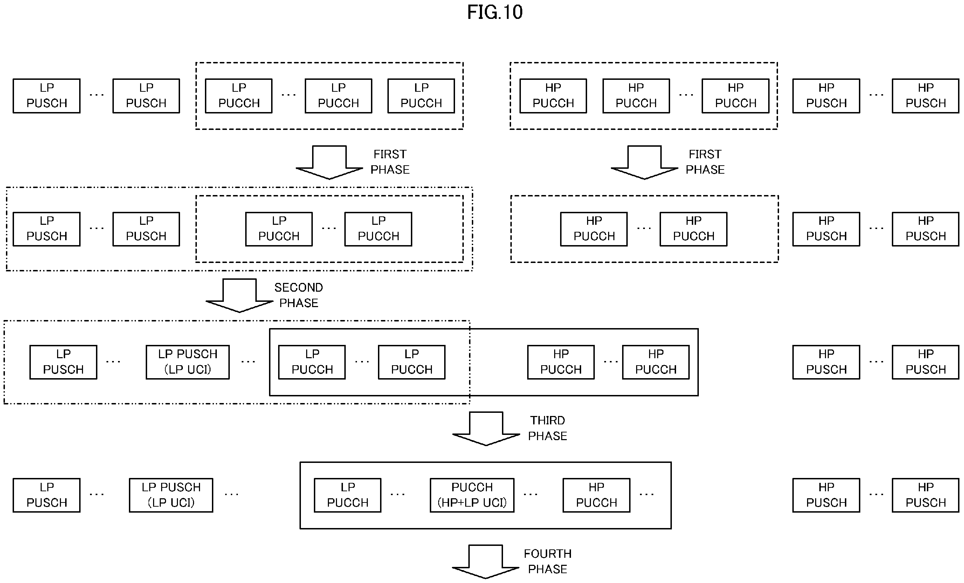

For example, as shown in FIGS. 9 and 10, a multiplex method of LP PUSCH, LP PUCCH, HP PUCCH and HP PUSCH is considered. A case in which the multiplex of LP PUCCH for HP PUSCH is not assumed and a case in which the multiplex of HP PUCCH for LP PUSCH is not assumed will be described below.

First, a case in which the multiplex of LP PUCCH for HP PUSCH is not assumed will be described with reference to FIG. 9.

In the first phase, the multiplex of PUCCH (LP PUCCH/LP PUCCH, HP PUCCH/HP PUCCH) of the same priority is executed. Specifically, in the first phase, temporally overlapping LP PUCCH can be multiplexed and temporally overlapping HP PUCCH can be multiplexed. As a result, there is no temporally overlapping LP PUCCH and there is no temporally overlapping HP PUCCH.

In the second phase, the same priority PUCCH/PUSCH (HP PUCCH/HP PUSCH) is multiplexed for HP PUCCH. Specifically, HP PUCCH can be multiplexed to HP PUSCH that temporally overlaps HP PUCCH (In FIG. 9, HP PUSCH (HP UCI)).

In the third phase, multiplexing of different priority PUCCH (LP PUCCH/HP PUCCH) is performed. Specifically, HP UCI and LP UCI can be multiplexed into one PUCCH (In FIG. 9, PUCCH (HP+LP UCI)).

In the fourth phase, multiplexing of different priority PUCCH/PUSCH (Here, LP PUSCH/HP PUCCH) is performed. Specifically, HP UCI can be multiplexed to LP PUSCH (For example, LP PUSCH (HP UCI)).

Second, a case where HP PUCCH is not multiplexed to LP PUSCH will be described with reference to FIG. 10.

In the first phase, multiplexing of PUCCH (LP PUCCH/LP PUCCH, HP PUCCH/HP PUCCH) of the same priority is performed. Specifically, in the first phase, temporally overlapping LP PUCCH can be multiplexed and temporally overlapping HP PUCCH can be multiplexed. As a result, there is no temporally overlapping LP PUCCH and there is no temporally overlapping HP PUCCH.

In the second phase, the same priority PUCCH/PUSCH (Here, LP PUCCH/LP PUSCH) is multiplexed for LP PUCCH. Specifically, LP PUCCH can be multiplexed for LP PUSCH that temporally overlaps LP PUCCH (In FIG. 10, LP PUSCH (LP UCI)).

In the third phase, multiplexing of different priority PUCCH (LP PUCCH/HP PUCCH) is performed. Specifically, HP UCI and LP UCI can be multiplexed into one PUCCH (In FIG. 10, PUCCH (HP+LP UCI)).

In the fourth phase, multiplexing of PUCCH/PUSCH (HP PUSCH/LP PUCCH) with different priorities is performed. Specifically, LP UCI can be multiplexed to HP PUSCH (For example, HP PUSCH (LP UCI)).

### (7) Operation and Effect

In an embodiment, the UE200 multiplexes the specific UCI on the uplink channel based on at least one of the first specific method, the second specific method, and the third specific method when the specific UCI overlaps the PUCCH or the UCI on the PUSCH with the same or different priority as the specific UCI in time. According to this configuration, when various UCIs are assumed to overlap the specific UCI on the specific PUCCH in time, the method and conditions for multiplexing the specific UCI are defined, so that the specific UCI can be appropriately multiplexed on the uplink channel.

### (8) Modified Example 1

The modified example 1 of the embodiment will be described below. In Example 1, the control unit 270 constitutes a control unit that determines whether or not to support simultaneous transmission of the physical uplink control channel (PUCCH) and the physical uplink data channel (PUSCH) based on specific conditions. Whether or not simultaneous transmission of PUCCH and PUSCH is supported (Can simultaneous transmission be supported?) may be determined based on the following viewpoints. The viewpoints may be read as options or specific conditions.

In viewpoint 1, the availability of simultaneous transmission support may be based on the physical priority (PHY priority) of PUCCH/PUSCH.

Specifically, simultaneous transmission may be supported without considering the PHY priority of PUSCH/PUCCH, may be supported for PUSCH/PUCCH with the same PHY priority, may be supported for PUSCH/PUCCH with different PHY priorities, and may be supported for PUSCH/PUCCH with a specific PHY priority.

For example, simultaneous transmission may be supported for PUSCH and PUCCH with different PHY priorities, and may be supported for HP PUCCH and LP PUSCH.

Here, the PHY priority may be defined as follows.

For example, the PHY priority of PUSCH may be defined by at least one of the DCI and RRC settings for PUSCH (Principle 1). The PHY priority of PUSCH may be defined by whether the UCI is multiplexed in PUSCH (Principle 2). The PHY priority of PUSCH may be defined by the priority of the UCI multiplexed in PUSCH when the UCI is multiplexed in PUSCH (Principle 3). The PHY priority of PUSCH may be defined by the type and priority of the UCI multiplexed in PUSCH when the UCI is multiplexed in PUSCH (Principle 4). One or more principles selected from Principles 1 to 4 may be defined in the RRC setting or in the radio communication system 10.

For example, the PHY priority of PUCCH may be defined based on the PUCCH-Config priority of the PUCCH resource used for PUCCH transmission (Principle 1). The PHY priority of PUCCH may be defined based on the UCI priority multiplexed on PUCCH (Principle 2). Principle 2 may include the concept of whether the priority of a UCI multiplexed on a PUCCH is one priority or two priorities. The PHY priority of a PUCCH may be based on the type and priority of the UCI multiplexed on the PUCCH (Principle 3). One or more principles selected from Principles 1 to 3 may be defined in the RRC setting or in the radio communication system 10.

In viewpoint 2, simultaneous transmission support may be defined based on the type of UCI.

Specifically, simultaneous transmission involving PUCCH may be supported if it includes a specific UCI with a specific priority, any priority, the same priority, or a different priority, and may not include a specific UCI with a specific priority, any priority, the same priority, or a different priority.

Simultaneous transmission involving PUSCH may be supported if it includes no UCI, may include a specific UCI with a specific priority, any priority, the same priority, or a different priority, and may not include a specific UCI with a specific priority, any priority, the same priority, or a different priority.

For example, simultaneous transmission of PUCCH with HP HARQ-ACK and PUSCH without HP HARQ-ACK may be supported.

In viewpoint 3, the availability of simultaneous transmission support may be based on UCI multiplexing.

Specifically, simultaneous transmission including PUSCH may be supported without any UCI, may be supported when UCIs with the same priority (HP or LP) are multiplexed, may be supported when UCIs with different priorities are multiplexed, may be supported when UCIs with both priorities (HP and LP) are multiplexed, may be supported when UCIs with specific priority are multiplexed, and may be supported regardless of whether UCIs with one priority are multiplexed or UCIs with two priorities are multiplexed.

Simultaneous transmission of PUCCH may be supported when UCIs with one priority are multiplexed, may be supported when UCIs with specific priority are multiplexed, may be supported when UCIs with two or more priorities are multiplexed, and may be supported regardless of whether UCIs with one priority are multiplexed or UCIs with two priorities are multiplexed.

For example, simultaneous transmission of PUCCH where UCIs with one priority are multiplexed and PUSCH where UCIs with the same priority as PUCCH are not multiplexed may be supported.

In viewpoint 4, the availability of simultaneous transmission support may be determined by the type of CA (Inter-band CA/Intra-band CA).

Specifically, simultaneous transmission may be supported for PUCCH and PUSCH on Inter-band CA CCs, for PUCCH and PUSCH on Intra-band CA CCs, or regardless of the type of CA (Inter-band CA/Intra-band CA).

In viewpoint 5, whether simultaneous transmission is supported may be determined by a combination of one or more points selected from Points 1 to 4.

For example, if simultaneous transmission of PUCCH and PUSCH with different priorities is supported, simultaneous transmission of PUCCH including HARQ-ACK with one priority and PUSCH without UCI with the same priority as PUCCH may be supported.

### (9) Modified Example 2

The modified example 2 of the embodiment will be described below. The NG-RAN20 (gNB100) may enable and disable simultaneous transmission. Enabling/disabling simultaneous transmission may be performed by RRC configuration, DCI, or MAC CE message.

In option 1, enabling/disabling simultaneous transmission may be specified at the same level as whether simultaneous transmission is supported as described above in Points 1 to 5.

For example, in a case where simultaneous transmission is supported or not based on Point 1, NG-RAN20 (gNB100) may enable/disable simultaneous transmission as described below. NG-RAN20 (gNB100) may enable simultaneous transmission of PUCCH/PUSCH when PUCCH/PUSCH have different priorities. NG-RAN20 (gNB100) may disable simultaneous transmission of PUCCH/PUSCH when PUCCH/PUSCH have the same priority.

In cases where simultaneous transmission support is determined based on viewpoints 1 and 2 (For example, if PUCCH/PUSCH have different priorities and PUCCH includes HP HARQ-ACK, then simultaneous PUCCH/PUSCH transmission is supported.), NG-RAN20 (gNB100) may enable/disable simultaneous transmission as described below. The NG-RAN20 (gNB100) may enable simultaneous transmission of PUCCH/PUSCH if PUCCH has different priorities and PUCCH includes HP HARQ-ACK. The NG-RAN20 (gNB100) may disable simultaneous transmission of PUCCH/PUSCH if PUCCH/PUSCH has the same priority and PUCCH does not include HP HARQ-ACK. The NG-RAN20 (gNB100) may disable simultaneous transmission of PUCCH/PUSCH if PUCCH/PUSCH has the same priority and PUCCH includes HP HARQ-ACK. The NG-RAN20 (gNB100) may disable simultaneous transmission of PUCCH/PUSCH if PUCCH/PUSCH has different priority and PUCCH does not include HP HARQ-ACK.

In option 2, whether or not simultaneous transmission is to be performed may be determined at a higher level than whether simultaneous transmission is supported as shown in points 1 to 5 above. The higher level may mean that additional conditions are imposed on whether or not simultaneous transmission is supported. The higher level may mean that additional conditions are imposed on enabling/disabling NG-RAN20 (gNB100).

Specifically, UE200 may determine whether additional conditions are met when enabling/disabling simultaneous transmission is notified or set from NG-RAN20 (gNB100). The UE200 may perform simultaneous transmission of PUCCH/PUSCH if additional conditions are met and may not perform simultaneous transmission of PUCCH/PUSCH if additional conditions are not met.

For example, consider a case where simultaneous transmission support is determined based on viewpoint 1. In such a case, the NG-RAN20 (gNB100) may enable or disable simultaneous transmission of PUCCH/PUSCH. The UE200 may perform simultaneous transmission of PUCCH/PUSCH with different priorities and may not perform simultaneous transmission of PUCCH/PUSCH with the same priority.

Consider a case where simultaneous transmission is supported or not based on viewpoints 1 and 2 (For example, if PUCCH/PUSCH have different priorities and PUCCH includes HP HARQ-ACK, then simultaneous PUCCH/PUSCH transmission is supported.). In such a case, NG-RAN20 (gNB100) may enable simultaneous transmission of PUCCH/PUSCH with different priorities and disable simultaneous transmission of PUCCH/PUSCH with the same priority. UE200 may perform simultaneous transmission of PUCCH/PUSCH when PUCCH/PUSCH has different priorities and PUCCH includes HP HARQ-ACK. UE200 may not perform simultaneous transmission of PUCCH/PUSCH when PUCCH/PUSCH has different priorities and PUCCH does not include HP HARQ-ACK. The UE200 may not perform simultaneous transmission of PUCCH/PUSCH when PUCCH/PUSCH have the same priority.

### (10) Other Embodiments

Although the contents of the present invention have been described in accordance with the above embodiments, it is obvious to those skilled in the art that the present invention is not limited to these descriptions but can be modified and improved in various ways.

Although not specifically mentioned in the foregoing disclosure, the application of any of the above options may be set by upper layer parameters, reported by UE Capability of UE 200, or predetermined by the radio communication system 10. In addition, the application of any of the above options may be determined by upper layer parameters and UE Capability. The options may be options such as a first specific method, a second specific method and a third specific method. The options may be options such as specific conditions used in a first specific method, a second specific method and a third specific method.

Here, UE Capability may include the following information elements:

First, UE Capability may include information elements that define whether it corresponds to the ability to multiplex specific UCIs into PUCCHs or UCIs on PUSCHs of the same or different priority as specific UCIs.

Second, UE Capability may include information elements that define whether it corresponds to the ability to multiplex specific UCIs into PUCCHs of the same or different priority as specific UCIs before multiplexing specific UCIs into UCIs on PUSCHs of the same or different priority as specific UCIs.

Third, UE Capability may include information elements that define whether it corresponds to the ability to multiplex specific UCIs into uplink channels of the same or different priority as specific UCIs before multiplexing specific UCIs into uplink channels of a different priority than specific UCIs.

Fourth, UE Capability may include information elements that define whether it corresponds to the ability to support Point 1 for PHY priority.

Fifth, the UE Capability may include an information element that defines whether the UE Capability corresponds to a feature that supports Point 2 on the type of UCI.

Fifth, the UE Capability may include an information element that defines whether the UE Capability corresponds to a feature that supports Point 3 on the multiplexing of UCIs.

Sixth, the UE Capability may include an information element that defines whether the UE Capability corresponds to a feature that supports Point 4 on the CA type.

Although not specifically addressed in the foregoing disclosure, an uplink channel (PUCCH/PUSCH) that temporally overlaps a specific PUCCH may mean an uplink channel (PUCCH/PUSCH) scheduled in the same time unit (slot or subslot) as the specific PUCCH.

The block diagram (FIGS. 4 and 5) used in the description of the foregoing embodiments shows a block of functional units. Those functional blocks (structural components) can be realized by a desired combination of at least one of hardware and software. Means for realizing each functional block is not particularly limited. That is, each functional block may be implemented using a single device that is physically or logically coupled, or two or more devices that are physically or logically separated may be directly or indirectly (For example, using wire, wireless, etc.) connected and implemented using these multiple devices. The functional block may be implemented using the single device or the multiple devices combined with software.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that functions transmission is called a transmission unit (transmitting unit) or a transmitter. As described above, the method of realization of both is not particularly limited.

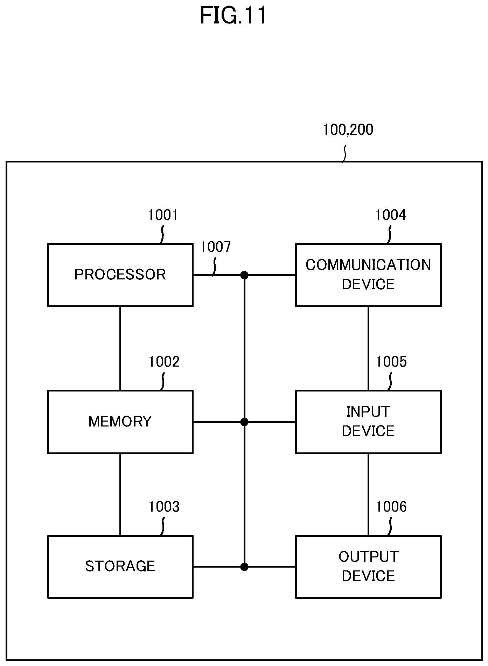

In addition, the above-mentioned gNB100 and UE200 (the device) may function as a computer for processing the radio communication method of the present disclosure. FIG. 11 is a diagram showing an example of a hardware configuration of the device. As shown in FIG. 11, the device may be configured as a computer device including a processor 1001, a memory 1002, a storage 1003, a communication device 1004, an input device 1005, an output device 1006 and a bus 1007.

Furthermore, in the following explanation, the term "device" can be replaced with a circuit, device, unit, and the like. The hardware configuration of the device may be configured to include one or more of the devices shown, or may be configured without some of the devices.

Each functional block of the device (see FIG. 4) is implemented by any hardware element of the computer device, or a combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

Processor 1001, for example, operates an operating system to control the entire computer. Processor 1001 may be configured with a central processing unit (CPU) including an interface to peripheral devices, a controller, a computing device, a register, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. In addition, the various processes described above may be performed by one processor 1001 or may be performed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage), etc. The memory 1002 can store programs (program codes), software modules, and the like that can execute the method according to one embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device, such as the processor 1001 and the memory 1002, is connected by a bus 1007 for communicating information. The bus 1007 may be configured using a single bus or a different bus for each device.

In addition, the device may be configured to include hardware such as a microprocessor, a digital signal processor (DSP), an application specific integrated circuit (ASIC), a programmable logic device (PLD), a field programmable gate array (FPGA), etc., which may provide some or all of each functional block. For example, the processor 1001 may be implemented by using at least one of these hardware.

The notification of information is not limited to the aspects/embodiments described in the present disclosure and may be carried out using other methods. For example, the notification of information may be performed by physical layer signaling (e.g., Downlink Control Information (DCI), Uplink Control Information (UCI), higher layer signaling (e.g., RRC signaling, Medium Access Control (MAC) signaling, Notification Information (Master Information Block (MIB), System Information Block (SIB)), other signals, or a combination thereof. RRC signaling may also be referred to as RRC messages, e.g., RRC Connection Setup messages, RRC Connection Reconfiguration messages, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-Wideband (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing steps, sequences, flowcharts, etc., of each of the embodiments/embodiments described in the present disclosure may be reordered as long as there is no conflict. For example, the method described in the present disclosure presents the elements of the various steps using an exemplary sequence and is not limited to the particular sequence presented.

The specific operation that is performed by the base station in the present disclosure may be performed by its upper node in some cases. It is apparent that in a network consisting of one or more network nodes having a base station, various operations performed for communication with a terminal may be performed by at least one of the base station and other network nodes (Examples include, but are not limited to, MME or S-GW.) other than the base station. In the above, an example in which there is one network node other than the base station is explained; however, a combination of a plurality of other network nodes (for example, MME and S-GW) may be used.

Information, signals (information, etc.) may be output from a higher layer (or lower layer) to a lower layer (or higher layer). It may be input and output via a plurality of network nodes.

The input/output information can be stored in a specific location (for example, a memory) or can be managed in a management table. Input/output information may be overwritten, updated, or added. The information can be deleted after outputting. The inputted information can be transmitted to another device.

The determination may be based on a value represented by a single bit (0 or 1), a true or false value (Boolean: true or false), or a numerical comparison (For example, comparison with a given value).

Each of the aspects/embodiments described in the present disclosure may be used alone, in combination, or alternatively in execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, if software is transmitted from a website, server, or other remote source using at least one of wired technology (Coaxial, fiber-optic, twisted-pair, and digital subscriber lines (DSL)) and wireless technology (Infrared, microwave, etc.), at least one of these wired and wireless technologies is included within the definition of a transmission medium.

Information, signals, or the like mentioned above may be represented by using any of a variety of different technologies. For example, data, instructions, commands, information, signals, bits, symbols, chips, etc. that may be referred to throughout the above description may be represented by voltage, current, electromagnetic waves, magnetic fields or magnetic particles, optical fields or photons, or any combination thereof.

The terms described in the present disclosure and those necessary for understanding the present disclosure may be replaced with terms having the same or similar meanings. For example, at least one of a channel and a symbol may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station may contain one or more (For example, three) cells, also called sectors. In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a base station performing communication services in this coverage and to a portion or the entire coverage area of at least one of the base station subsystems.

In the present disclosure, the terms "mobile station (Mobile Station: MS)," "user terminal," "user equipment (User Equipment: UE)," "terminal" and the like can be used interchangeably.

A mobile station may also be referred to by one of ordinary skill in the art as a subscriber station, mobile unit, subscriber unit, wireless unit, remote unit, mobile device, wireless device, radio communication device, remote device, mobile subscriber station, access terminal, mobile terminal, wireless terminal, remote terminal, handset, user agent, mobile client, client, or some other appropriate term.

At least one of a base station and a mobile station may be called a transmitting device, a receiving device, a communication device, or the e like. Note that, at least one of a base station and a mobile station may be a device mounted on a moving body, a moving body itself, or the like. The mobile may be a vehicle (For example, cars, planes, etc.), an unmanned mobile (For example, drones, self-driving cars,), or a robot (manned or unmanned). At least one of a base station and a mobile station can be a device that does not necessarily move during the communication operation. For example, at least one of a base station and a mobile station may be an Internet of Things (IoT) device such as a sensor.

The base station in the present disclosure may be read as a mobile station (user terminal, hereinafter the same). For example, each aspect/embodiment of the present disclosure may be applied to a configuration in which communication between a base station and a mobile station is replaced by communication between a plurality of mobile stations (For example, it may be called device-to-device (D2D), vehicle-to-everything (V2X), etc.). In this case, the mobile station may have the function of the base station. Further, words such as "up" and "down" may be replaced with words corresponding to communication between terminals (For example, "side"). For example, terms an uplink channel, a downlink channel, or the like may be read as a side channel.

Similarly, the mobile station in the present disclosure may be replaced with a base station. In this case, the base station may have the function of the mobile stat ion.

The radio frame may be composed of one or more frames in the time domain. Each frame or frames in the time domain may be called a subframe.

The subframes may also be composed of one or more slots in the time domain. The subframes may be of a fixed time length (For example, 1 ms) independent of numerology.

The numerology may be a communication parameter applied to at least one of the transmission and reception of a signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may consist of one or more symbols (Orthogonal Frequency Division Multiplexing (OFDM)) symbols, Single Carrier Frequency Division Multiple Access (SC-FDMA) symbols, etc., in tin the time domain. A slot may be a unit of time based on the numerology.

A slot may include a plurality of minislots. Each minislot may consist of one or more symbols in the time domain. A minislot may also be called a subslot. A minislot may be composed of fewer symbols than slots. The PDSCH (or PUSCH) transmitted in time units greater than the minislot may be referred to as the PDSCH (or PUSCH) mapping type A. The PDSCH (or PUSCH) transmitted using the minislot may be referred to as the PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be referred to as the transmission time interval (TTI), multiple consecutive subframes may be referred to as the TTI, and one slot or minislot may be referred to as the TTI. That is, at least one of the subframes and the TTI may be a subframe in the existing LTE (1 ms), a period shorter than 1 ms (For example, 1-13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called a TTI, one or more TTIs (That is, one or more slots or one or more minislots) may be the minimum time unit for scheduling. The number of slots (number of minislots) constituting the minimum time unit for scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. A TTI that is shorter than the normal TTI may be referred to as a shortened TTI, a short TTI, a partial or fractional TTI, a shortened subframe, a short subframe, a minislot, a subslot, a slot, or the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

A resource block (RB) is a time- and frequency-domain resource allocation unit that may include one or more consecutive subcarriers in the frequency domain. The number of subcarriers included in RB may be, for example, twelve, and the same regardless of the topology. The number of subcarriers included in the RB may be determined based on the neurology.

The time domain of the RB may also include one or more symbols and may be one slot, one minislot, one subframe, or one TTI in length. The 1TTI, the 1 subframe, and the like may be composed of one or more resource blocks, respectively.

The one or more RBs may be called physical resource blocks (PRBs), sub-carrier groups (SCGs), resource element groups (REGs), PRB pairs, RB pairs, and the like.

The resource blocks may be composed of one or more resource elements (REs). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by the index of the RB relative to the common reference point of the carrier. PRB may be defined in BWP and numbered within that BWP.

BWP may include UL BWP (UL BWP) and DL BWP (DL BWP). For the UE, one or more BWPs may be set in one carrier.

At least one of the configured BWPs may be active, and the UE may not expect to send and receive certain signals/channels outside the active BWP. Note that "cell," "carrier," and the like in this disclosure may be read as "BWP."

The above-described structures such as a radio frame, subframe, slot, minislot, and symbol are merely examples. For example, the number of subframes included in the radio frame, the number of slots per subframe or radio frame, the number of minislots included in the slot, the number of symbols and RBs included in the slot or minislot, the number of subcarriers included in the RB, and the number of symbols in the TTI, the symbol length, the cyclic prefix (CP) length, and the like may be varied.

The terms "connected," "coupled" or any variation thereof means any direct or indirect connection or combination between two or more elements and may include the presence of one or more intermediate elements between two elements "connected" or "coupled" to each other. The connection or connection between elements may be physical, logical or a combination thereof. For example, "connection" may be read as "access." As used in the present disclosure, two elements may be considered to be "connected" or "coupled" to each other using at least one of one or more wire, cable and printed electrical connections and, as some non-limiting and non-inclusive examples, electromagnetic energy having wavelengths in the radio frequency, microwave and optical (both visible and invisible) regions, etc.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

The "means" in the configuration of each apparatus may be replaced with "unit," "circuit," "device," and the like.

Any reference to elements using designations such as "first" and "second" as used in this disclosure does not generally limit the quantity or order of those elements. Such designations can be used in the present disclosure as a convenient way to distinguish between two or more elements. Accordingly, references to first and second elements do not mean that only two elements may be employed therein, or that the first element must in any way precede the second element.

In the present disclosure, the used terms "include," "including," and variants thereof are intended to be inclusive in a manner similar to the term "comprising." Furthermore, it is intended that the term "or (or)" as used in the present disclosure is not an exclusive OR.

Throughout this disclosure, for example, during translation, if articles such as a, an, and the in English are added, in this disclosure, these articles shall include plurality of nouns following these articles.

As used in this disclosure, the terms "determining," "judging" and "deciding" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. In other words, "judgment" and "decision" may include regarding some action as "judgment" and "decision." Moreover, "judgment (decision)" may be read as "assuming," "expecting," "considering," and the like.

In the present disclosure, the term "A and B are different" may mean "A and B are different from each other." It should be noted that the term may mean "A and B are each different from C." Terms such as "leave," "coupled," or the like may also be interpreted in the same manner as "different."

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 Radio communication system
20 NG-RAN
100 gNB
110 Reception unit
120 Transmission unit
130 Control unit
200 UE
210 Radio signal transmission and reception unit
220 Amplifier unit
230 Modulation and demodulation unit
240 Control signal and reference signal processing unit
250 Encoding/decoding unit
260 Data transmission and reception unit
270 Control unit
1001 Processor
1002 Memory
1003 Storage
1004 Communication device
1005 Input device
1006 Output device
1007 Bus

## Claims

1. A terminal comprising:
a transmission unit that transmits uplink control information on an uplink channel; and
a control unit that determines whether to support a simultaneous transmission of a physical uplink control channel and a physical uplink data channel based on a specific condition.

2. The terminal of claim 1, wherein
the specific condition is defined based on one or more elements selected from among a physical priority of the physical uplink control channel and the physical uplink data channel, a type of the uplink control information, a multiplexing of the uplink control information, and a type of carrier aggregation.

3. The terminal of claim 1 or claim 2, wherein
the physical uplink control channel and the physical uplink data channel are enabled or disabled by the network.

4. A radio communication system comprising:
a terminal; and
a base station;
the terminal comprises:
a transmission unit that transmits uplink control information on an uplink channel; and
a control unit that determines whether to support a simultaneous transmission of a physical uplink control channel and a physical uplink data channel based on a specific condition.

5. A radio communication method comprising:
a step of transmitting uplink control information on an uplink channel; and
a step of determining whether to support a simultaneous transmission of a physical uplink control channel and a physical uplink data channel based on a specific condition.
